(19) Europäisches Patentamt
European Patent Office
Office européen des brevets

(11) **EP 2 323 273 A2**

(12) **EUROPEAN PATENT APPLICATION**

(43) Date of publication:
**18.05.2011 Bulletin 2011/20**

(51) Int Cl.:
*H04B 7/02* (2006.01)      *H04B 7/04* (2006.01)
*H04B 1/38* (2006.01)

(21) Application number: **10188378.3**

(22) Date of filing: **21.10.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.11.2009 US 612058**

(71) Applicant: **ITT Manufacturing Enterprises, Inc.**
**Wilmington, DE 19801 (US)**

(72) Inventor: **Hall, Edward Allen**
**For Wayne, IN 46814 (US)**

(74) Representative: **Dreiss**
**Patentanwälte**
**Gerokstrasse 1**
**70188 Stuttgart (DE)**

(54) **Communications link redundancy including multiple input, multiple output architecture**

(57) A communications network includes two base stations and a mobile station. The mobile station has at least one transceiver, and at least one splitter/combiner module, where each module is coupled to the at least one transceiver. At least two antennas are included, with each antenna coupled to the at least one splitter/combiner module. A controller selects at least one of the transceivers for communication with the two antennas, where one antenna is configured to communicate with one base station and the other antenna is configured to communicate with the other base station. Each transceiver includes a transmitter, a receiver and a switch. The switch selectively connects the transmitter or the receiver to a respective splitter/combiner module.

FIG. 1

EP 2 323 273 A2

**Description**

FIELD OF INVENTION

The present invention relates, in general, to a mobile communications link. More specifically, the present invention relates to a mobile communications link that uses directional antennas and a signal splitter/combiner to form link redundancy.

BACKGROUND OF THE INVENTION

Radio systems with mobility or mesh capability may be designed to re-route signals as link conditions change in order to maintain reliable communications. For example, an established radio path may cease to be optimal, because of geometric changes caused by mobility, physical blockage of a radio path, or equipment failure. When a radio system is able to rapidly switch to an alternative communications path having better link conditions, the radio system effectively provides more reliable continuous communications.

The use of high-gain antennas to establish a communications link increases operating range and efficiency, while maintaining a link with less transmitter power. The use of directional antennas, however, may interfere with a radio systems' ability to switch to an alternative path, because the field-of-view of the antenna may be limited.

SUMMARY OF THE INVENTION

To meet this and other needs, and in view of its purposes, the present invention provides a communication system in a network of stations. The network includes at least two base stations, a mobile station including at least one transceiver, at least one splitter/combiner module. Each splitter/combiner module is coupled to the at least one transceiver. The network also includes at least two antennas, each coupled to the at least one splitter/combiner module and a controller for selecting the transceiver for communication with the at least two antennas. At least one of the two antennas is configured to communicate with one of the base stations. The other of the two antennas is configured to communicate with another of the at least two base stations.

The transceivers may include a transmitter, a receiver and a switch. The switch selectively connects the transmitter or the receiver to the splitter/combiner module. Each of the antennas may include directional beams for transmitting and receiving data from the base stations in the network. Two splitter/combiner modules may be connected to at least two transceivers, respectively, and each of the two splitter/combiner modules is coupled to the two antennas.

The mobile station may include two transceivers, respectively, coupled to two splitter/combiner modules. Both of the two antennas may be coupled to each splitter/combiner module, and the controller selects at least one of the two transceivers to communicate with at least one of the two antennas. Each antenna communicates with one of the two base stations. The controller may select at least one of the two transceivers to communicate with one of the two antennas after determining which has the greatest signal quality to increase signal throughput and improve transmit signal quality. The two transceivers may be multiple input, multiple output transceivers and the two antennas are multiple input, multiple output diversity antennas. The base stations in the network may be either stationary or mobile stations.

In one exemplary embodiment of the present invention a station in a network includes at least at least two transceivers and at least two splitter/combiner modules. The at least two splitter/combiner modules are each coupled to one of the transceivers. The station also includes at least two antennas, each coupled to one of the splitter/combiner modules. One of the antennas is pointed toward one base station and the other of the antennas is pointed toward another base station.

The station also may include a controller for selecting at least one of the transceivers for communication with at least one of the antennas and a controller for selecting one of the base stations, based on a signal quality measurement of received signals from the base stations. The signal quality measurement may be based on an instantaneous signal value or an average signal value and a handoff algorithm may be used for switching from one base station to the other base station. Multiple transceivers may be activated to create a multiple input multiple output transceiver, and a switch for selecting a receiver or a transmitter.

In another exemplary embodiment of the present invention, a station in a network includes at least three transceivers and at least first, second and third splitter/combiner modules. The at least first, second and third splitter/combiner modules are coupled to one of the transceivers. The station also includes at least first, second and third antennas. The first antenna is coupled to the first and second splitter/combiner modules, respectively. The second antenna is coupled to the first and second splitter/combiner modules, respectively. The third antenna is coupled to the third splitter/combiner module. The first and third antennas are pointed toward one base station and the second antenna is pointed toward another base station.

A fourth splitter/combiner module may be coupled to yet another respective transceiver, and a fourth antenna may be coupled to the third splitter/combiner module. The fourth antenna is pointed toward the other base station. The third antenna may be coupled to the fourth splitter/combiner module. A controller may be used to select at least one of the transceivers for communication with one or the other base station. The controller selects one or the other base station based on a signal quality measurement of received signals from the base stations.

It is understood that the foregoing general description and the following detailed description are exemplary, but not restrictive, of the invention.

BRIEF DESCRIPTION OF THE DRAWINGS

The foregoing summary, as well as the following detailed description of exemplary embodiments of the invention, may be better understood when read in conjunction with the appended drawings, which are incorporated herein and constitute part of the specification. For the purposes of illustrating the invention, there is shown in the drawing, exemplary embodiments of the present invention. It will be understood, however, that the invention is not limited to the precise arrangements and instrumentalities shown. In the drawings, the same reference numerals are employed designating the same elements throughout the several figures.

In the drawings:

FIG. 1 is a schematic diagram depicting a communications link from a mobile station having N transmit/receive modules and N splitter/combiner modules, where N is an integer equal to one or greater, in accordance with an embodiment of the present invention;

FIG. 2 is a flow-chart diagram of an exemplary mobility handoff algorithm;

FIG. 3 is a schematic diagram depicting a communications link between (a) a mobile station having 3 transmit/receive modules and 3 splitter/combiner modules and (b) two base stations, in accordance with an embodiment of the present invention; and

FIG. 4 is a schematic diagram depicting a communications link between (a) a mobile station having 4 transmit/receive modules and 4 splitter/combiner modules and (b) two base stations, in accordance with an embodiment of the present invention.

DETAILED DESCRIPTION OF THE INVENTION

Although the invention is illustrated and described herein with reference to specific embodiments, the invention is not intended to be limited to the details shown. Rather, various modifications may be made in the details within the scope and range of equivalents of the claims and without departing from the invention.

The present invention relates to a radio networking method and system that use directional antennas for increased range and efficiency, while maintaining an ability to select an alternative communications path as link conditions change. The system architecture of the present invention uses multiple signal splitter/combiner modules together with several antennas to provide multiple paths for communications, where each path may include a high-gain antenna. The architecture includes multiple-input, multiple-output (MIMO) modules for path diversity. The architecture may be applicable to a variety of communication standards, such as IEEE 802.16e (also known as Mobile WiMAX) and Long Term Evolution (LTE).

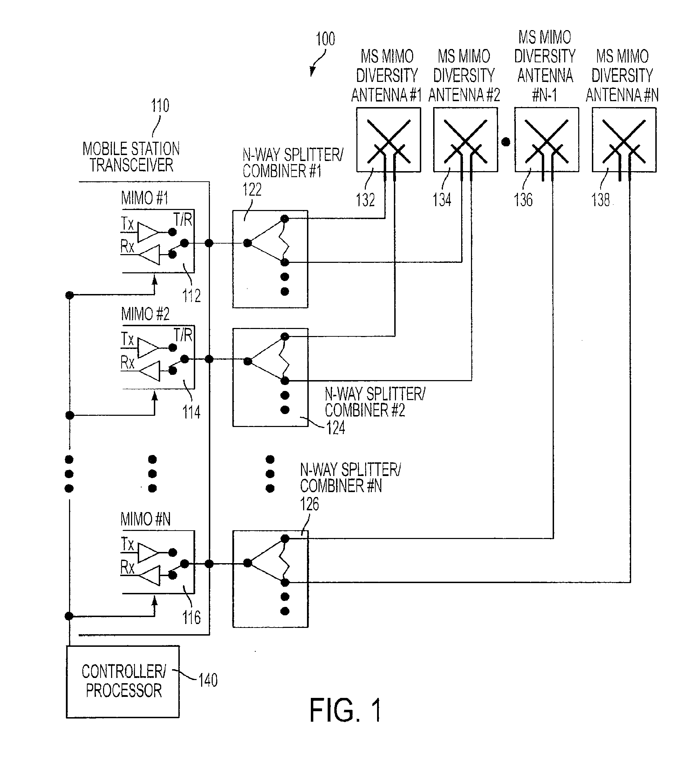

In an exemplary embodiment of the present invention, as shown in FIG. 1, a radio networking system, generally designated as 100, includes a mobile station transceiver 110. The mobile station transceiver includes a first MIMO 112, a second MIMO 114, etc., up to an Nth MIMO 116. Each MIMO includes a transmitter (Tx) and a receiver (Rx) which may be switched into the communications link by way of a transmit/receive (T/R) switch. The T/R switches may each be controlled by a controller or processor, shown generally as element 140.

The first MIMO 112 is connected to a first N-way splitter/combiner module 122. The first N-way splitter/combiner module, for example, may be a Wilkerson power splitter/combiner module. As shown, one terminal of the first N-way splitter/combiner module is connected to a mobile station (MS) MIMO diversity antenna 132. Similarly, another terminal of the first N-way splitter/combiner module 122 is connected to an MS MIMO diversity antenna 134. The MIMO diversity antenna 134, for example, is shown as a pair of linear elements having a common center point, where the elements are rotated 90 degrees spatially so that they are orthogonal to each other. The MIMO diversity antenna may also be formed from a pair of linear elements that are separated from their center points by, typically, a ½ wavelength or greater.

In a similar manner, second MIMO 114 is connected to a second N-way splitter/combiner 124. One terminal of second N-way splitter/combiner 124 is connected to another terminal of MS MIMO diversity antenna 132. The other terminal of N-way splitter/combiner 124 is connected to the other terminal of second MS MIMO diversity antenna 134.

The configuration shown in FIG. 1 continues similarly up to the Nth MIMO 116. The Nth MIMO 116 is connected to the Nth N-way splitter/combiner 126. In turn, the first terminal of the Nth N-way splitter/combiner 126 is connected to MS MIMO diversity antenna 136. The other terminal of the Nth N-way splitter/combiner 126 is connected to MS MIMO diversity antenna 138.

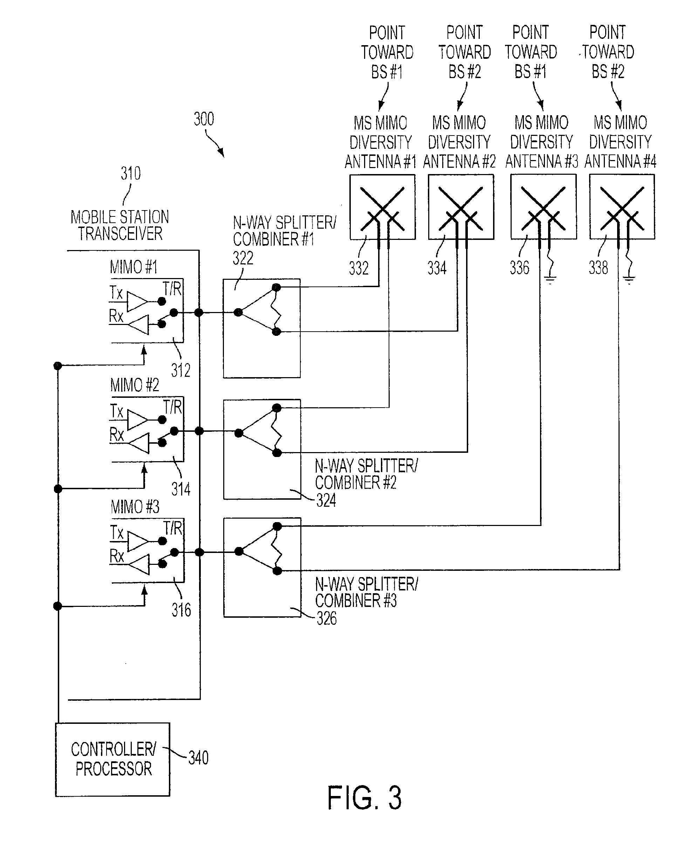

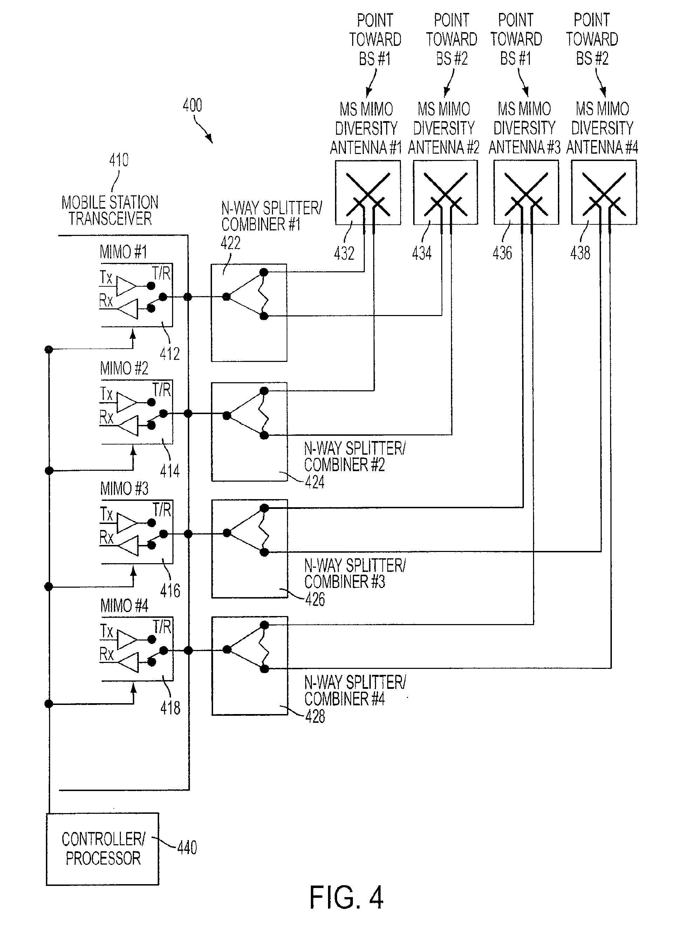

In a configuration that includes four MIMOs, the system is required to have four diversity antennas, however, the converse is not true. If there are four diversity antennas, the system is not required to have four MIMOs. An example of this is discussed below in alternative embodiments shown in FIGS. 3 and 4.

In operation, the system includes a receive mode and a transmit mode. During the receive mode, the system may activate one or more antennas to receive one or more signals. Activating more than one antenna during the receive mode improves the received signal-to-noise (S/N) ratio. By using multiple receive paths, the signal processing gain and receiver sensitivity are increased. During the transmit mode, one or more MIMO channels may be activated to create multiple diversity signal propagation paths to a receiver.

During the transmit mode, the system activates a combination of transmit channels. When the system is transmitting, the first MIMO 112, second MIMO 114 and all MIMOs through the Nth MIMO 116 may be operating simultaneously in the transmit mode. The transmitters and receivers of each of the MIMOs may be controlled by a single controller/processor 140 that manages the MIMOs and switches them from a transmit mode to a receive mode. By using all the MIMOs to transmit a signal to a base station, the throughput of mobile station transceiver 110 may be increased by forming multiple signal propagation paths that carry data in parallel, or by placing identical data streams on multiple paths simultaneously to increase receiver sensitivity through signal processing gain.

Similarly, in the receive mode, the system activates a combination of receive channels by way of controller/processor 140. This combination of channels may be processed by the controller/processor to increase receiver sensitivity and throughput capacity to produce signal processing gain. The controller/processor, however, may change the first MIMO 112 through the Nth MIMO 116 from a transmit mode to a receive mode, so that all MIMOs operate simultaneously in the receive mode. This results in improved signal reception and improved throughput.

A radio frequency network with multiple directional antennas enables access between a mobile radio and one or multiple base stations with quick switch-over, when link conditions degrade. This also provides continuous communications and link redundancy for fixed-position radios. The mobility hand-off feature allows a failing communications link to be recognized and corrected in a fraction of a second with a switch-over preferably completed before the link has failed. The use of high-gain, high-directivity antennas enables improved link performance and improved power efficiency.

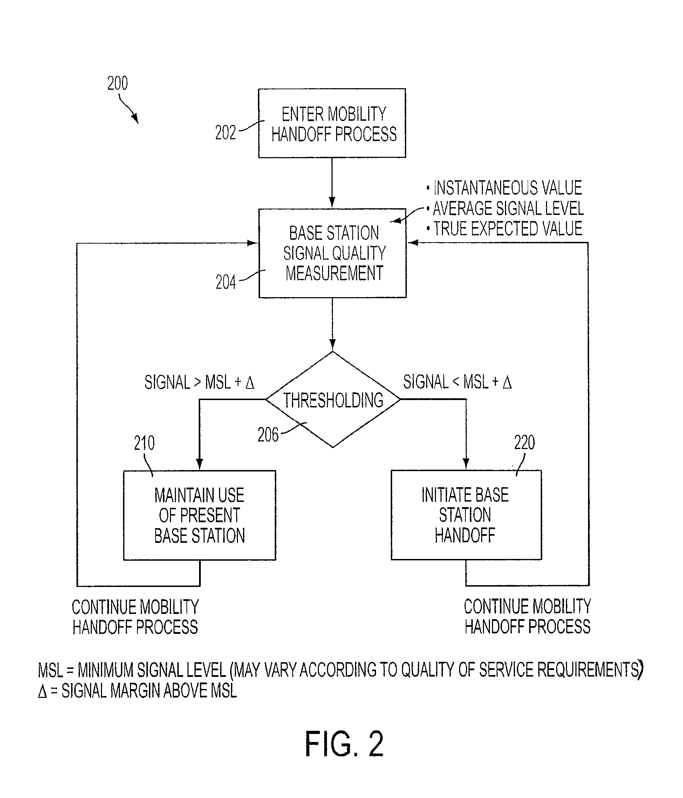

Conversely, the architecture also provides an advantage for the receive direction from a base station to a mobile radio. The signal transmitted from a base station is received through a directional antenna and provided to the radio receiver through a signal splitter/combiner unit. Signals from multiple base stations may be provided to the radio receiver by way of antennas pointed toward each base station. A mobility algorithm, such as the exemplary method discussed above and shown in FIG. 2, evaluates the link quality to each base station for selecting an optimal link path.

Each directive antenna may have a stationary pattern for a fixed-position network. The directive antennas may also include beam-steering capabilities to maintain proper orientation towards a base station for a mobile station in motion. The directive antennas do not necessarily require a limited beamwidth in the horizontal direction, however, in order to achieve antenna gain. If directional limitation is required, it may be designed in the vertical direction of the antenna, where the antenna may have a limited 10-20 degree coverage, for example. Such directivity in the vertical direction allows the antenna to be designed with as much as a 360 degree horizontal coverage. Because the base stations are typically located at the horizon, a directional antenna is able to transmit to, or receive from a base station even though it has limited vertical coverage.

The increased gain of a directive antenna, as compared to that of an omni-directional antenna, overcomes the signal loss incurred when dividing the signal between multiple antennas. For example, an N-way signal splitter/combiner reduces the signal level delivered to a directional antenna by a factor of 1/N. The directive antenna, however, has a gain increase that more than compensates for the 1/N signal reduction. Similarly, the receive sensitivity which is reduced by 1/N, is compensated for by an increased gain in the directive antenna.

The net change in gain is as follows:

$$\Delta \text{ gain} = G_{Directional\_Antenna} - G_{Omni\_Antenna} - 10*\log(1/N) - \text{divider loss}$$

For example, in a 2-way signal splitter/combiner unit, the following net gain may be calculated:

$$G_{Directional\_Antenna} = 16 \text{ dBi}$$

$$G_{Omni\_Antenna} = 3 \text{ dBi}$$

$$N = 2$$

$$\text{Divider loss} = 0.3 \text{ dBi}$$

$$\Delta \text{ gain} = 9.7 \text{ dB}$$

The Δ gain is the net gain advantage of the system. Therefore, with a two way signal splitter/combiner unit, the net gain advantage for the system is 9.7 dB. This represents a significant increase in range or a significant opportunity to reduce transmitted power, while maintaining communication quality.

A mobile station operating in a network includes the ability to communicate with and through one base station, while maintaining an awareness of other base stations in the vicinity. An algorithm shown in FIG. 2 may be used to track the available base station links and decide when to drop one base station link in favor of another based on quality of service. The need to change a link may occur, of course, because of a change in distance of the link, an obstruction in the link, other signal interference in the link, antenna pattern changes, or equipment failure, etc.. The algorithm of FIG. 2 may be used whether the mobile station is in a fixed position or is mobile. In addition, switching from one base station to another may occur concurrently with the algorithm maintaining continuous awareness of the base stations in the network.

The process for a mobile station to change its link from one base station to another is called handoff management. A handoff management decision may be used by mobile stations as well as fixed stations. An exemplary embodiment of a handoff management process may be found in "Fundamentals of WiMAX: Understanding Broadband, Wireless Networking" by Jeffrey G. Andrews, Arunabha Ghash, Rias Muhamed, Prentice Hall.

The process of mobility handoff of a mobile station from one base station to another may occur in two phases. First, the system may detect a need for a handoff and decide to execute a change in the communications link. Second, the system may execute the handoff while managing the transition process, so that all data packets are delivered correctly with minimal service interruption.

Referring to FIG. 2, there is shown an exemplary method, designated as 200, which begins in step 202 upon entering the mobility handoff process. After entering the mobility handoff process, the method proceeds to step 204, where the quality of the base station signal is determined. The base station quality may be determined based on an instantaneous signal value, an average signal value or an expected signal value. After the signal quality is measured, method 200 compares the measured signal quality to a threshold value, in step 206. If the signal quality is higher than the threshold value, the method branches to step 210 and maintains use of the present base station. The method continues the mobility handoff process and returns to step 204, where the base station signal quality is once again measured and the process is repeated.

If step 206, on the other hand, determines that the signal quality is lower than the threshold value, the method branches to step 220 and initiates a base station handoff. The base station is changed to another base station and the method returns to step 204. Here, the method once again restarts the same sequence with the new base station.

As illustrated in FIG. 2, the handoff decision is based on signal quality. The signal measurement value, in step 206, is compared to a threshold value having a minimum signal level (MSL) with an added offset value. The MSL is defined as a minimum signal level that provides communication integrity required to achieve a predetermined quality of service. The offset value is added to the MSL to reduce the probability that the signal may drop below the MSL during the handoff process. Additional factors may also be added, which may be more complex, such as determining whether the candidate base station has a capacity to handle additional data throughput. In addition, the offset value may be adjusted after the handoff process to provide a "hysteresis" effect that minimizes multiple back and forth switching between two base stations that have similar signal levels.

Signal sampling during the handoff decision may be performed periodically at a rate set by the equipment supplier for best performance. For example, sampling may be done at an average of 20 times per second. Data flow interruption during a handoff may be limited to a latency of 50 ms or less, with an associated packet loss of 1% or less. The signal quality measurement may occur simultaneously with normal data flow and may be processed in parallel with other operations, in order to minimize data transfer delay.

The controller/processor 140 executing the handoff algorithm may perform three tasks: (a) packaging the data to transmit to the base station and analyzing the data packet transmitted from the base station; (b) evaluating the channel quality of the base station currently being communicated with; and (c) evaluating the signal levels from any of the other base stations to determine, if there is a better signal quality from another base station. These three tasks may be executed in parallel.

In an exemplary WiMAX system, a mobile station collects and periodically reports its measurements to a subscribed base station. The mobile station evaluates beacon signals from surrounding base stations within range. Signal quality is evaluated in terms of signal-to-noise (S/N) ratio, or signal-to-interference (S/I) ratio. These measurements may be based on instantaneous value, average signal level, or expected value of a predetermined number of samples. In some systems, the base station may aid the mobile station by providing a neighbor list of near by base stations with respective parameters required to track them.

Referring to FIG. 3, an exemplary architecture is shown including a 3x3 MIMO mobile station 310 communicating with two base stations (BS). The first MIMO 312 is connected to N-way splitter/combiner 322. The N-way splitter/combiner 322 splits the output signals of MIMO 312 to a first terminal of a first MIMO diversity antenna 332 and a second MIMO diversity antenna 334. Similarly, a second MIMO 314 is connected to N-way splitter/combiner 324, which splits the output signal between MIMO diversity antennas 332 and 334. A third MIMO 316 is connected to a third N-way splitter/combiner 326, which splits the output signal between a third MIMO diversity antenna 336 and fourth MIMO diversity antenna 338. In this embodiment, the second terminals of MIMO diversity antennas 336 and 338 may be terminated in a matched impedance to maintain antenna isolation. As an alternative, a single-polarization antenna may be used.

Conversely, receive signals from MIMO diversity antennas 332 and 334 are combined by splitter/combiner 322 for coupling the receive signals to the receive side of first MIMO 312. In addition, receive signals from MIMO diversity antennas 332 and 334 are combined by splitter/combiner 324 for coupling the receive signals to the receive side of second MIMO 314. Furthermore, receive signals from MIMO diversity antennas 336 and 338 are combined by splitter/combiner 326 for coupling the receive signals to the receive side of third MIMO 316. As shown, MIMO diversity antennas 332 and 334 communicate with base station 1 and MIMO diversity antennas 334 and 338 communicate with base station 2.

The transmitters and receivers of each of the MIMOs are coupled to a controller/processor 340 that manages the MIMOs and switches them between transmit and receive modes.

Referring now to FIG. 4, there is shown a 4x4 MIMO transceiver, designated as 410. The transceiver 410 includes four MIMOs 412, 414, 416 and 418. Each respective MIMO is connected to an N-way splitter/combiner, shown as 422, 424, 426 and 428, respectively. Each N-way splitter/combiner splits the output signals from a transmit path of a respective MIMO, or combines received signals into a received MIMO path. The first splitter/combiner 422 is connected to a first terminal on a first MIMO diversity antenna 432 and a second MIMO diversity antenna 434. Similarly, the second splitter/combiner 424 is connected to MIMO diversity antennas 432 and 434. The third N-way splitter/combiner 426 is connected to a third MIMO diversity antenna 436 and a fourth MIMO diversity antenna 438.

The fourth MIMO 418 has been added to connect to the fourth N-way splitter/combiner 428. The fourth N-way splitter/combiner 428 is connected to the second terminals of MIMO diversity antennas 436 and 438.

The transmitters and receivers of each of the MIMOs are controlled by controller/processor 440 that manages and switches them between transmit and receive modes. As may be seen from FIGS. 3 and 4, if four MIMOs are used in the architecture, then four directive antennas must also be present. Inversely, if four directive antennas are used in the architecture, then either three or four MIMOs may be used in the mobile station transceiver.

While preferred embodiments of the invention have been shown and described herein, it will be understood that such embodiments are provided by way of example only. Numerous variations, changes and substitutions will occur to those skilled in the art without departing from the spirit of the invention. Accordingly, it is intended that the appended claims cover all such variations as fall within the spirit and scope of the invention.

## Claims

1.  A communication system in a network of stations comprising:

    at least two base stations;
    a mobile station including at least one transceiver,
    at least one splitter/combiner module, each coupled to the at least one transceiver,
    at least two antennas, each coupled to the at least one splitter/combiner module; and
    a controller for selecting the at least one transceiver for communication with the at least two antennas;
    wherein one of the two antennas is configured to communicate with one of the at least two base stations, and
    the other of the two antennas is configured to communicate with another of the at least two base stations.

**2.** The communication system of claim 1 wherein
the at least one transceiver includes a transmitter, a receiver and a switch, and
the switch selectively connects the transmitter or the receiver to the at least one splitter/combiner module.

**3.** The communication system of claim 1 or 2 wherein each of the antennas includes directional beams for transmitting and receiving data from the base stations in the network.

**4.** The communication system of one of the preceding claims, wherein two splitter/combiner modules are connected to at least two transceivers, respectively, and
each of the two splitter/combiner modules is coupled to the two antennas.

**5.** The communication system of one of the preceding claims, wherein the mobile station includes two transceivers, respectively, coupled to two splitter/combiner modules,
both of the two antennas are coupled to each splitter/combiner module, and
the controller selects at least one of the two transceivers to communicate with at least one of the two antennas, wherein each antenna communicates with one of the two base stations;
and in particular wherein the controller selects at least one of the two transceivers to communicate with

- one of the two antennas after determining which has the greatest signal quality; or
- the two antennas to increase signal throughput and improve transmit signal quality.

**6.** The communication system of claim 5 wherein

- the two transceivers are multiple input, multiple output transceivers; or
- the two antennas are multiple input, multiple output diversity antennas.

**7.** The communication system of one of the preceding claims, wherein the base stations in the network are either stationary or mobile stations.

**8.** A station in a network comprising:

at least two transceivers,
at least two splitter/combiner modules, each coupled to one of the transceivers, and
at least two antennas, each coupled to one of the splitter/combiner modules,
wherein one of the antennas is pointed toward one base station and
the other of the antennas is pointed toward another base station.

**9.** The station of claim 8 including a controller for

- selecting at least one of the transceivers for communication with at least one of the antennas; or
- selecting one of the base stations, based on a signal quality measurement of received signals from the base stations.

**10.** The station of claim 9 wherein
the signal quality measurement is based on an instantaneous signal value or an average signal value, and
a handoff algorithm is used for switching from one base station to the other base station.

**11.** The station of one of claims 8 to 10 wherein multiple transceivers are activated to create a multiple input multiple output transceiver, and a switch for selecting a receiver or a transmitter.

**12.** The station of one of claims 8 to 11 comprising:

at least three transceivers,
at least first, second and third splitter/combiner modules, each coupled to one of the transceivers, and
at least first, second and third antennas, wherein
the first antenna is coupled to the first and second splitter/combiner modules, respectively,
the second antenna is coupled to the first and second splitter/combiner modules, respectively,
the third antenna is coupled to the third splitter/combiner module,

and
the first and third antennas are pointed toward one base station and
the second antenna is pointed toward another base station.

**13.** The station of claim 12 wherein
a fourth splitter/combiner module is coupled to yet another respective transceiver,
a fourth antenna is coupled to the third splitter/combiner module, and the fourth antenna is pointed toward the other base station.

**14.** The station of claim 13 wherein the third antenna is coupled to the fourth splitter/combiner module.

**15.** The station of claim 13 or 14 including a controller for selecting at least one of the transceivers for communication with one or the other base station, and in particular wherein the controller selects one or the other base station based on a signal quality measurement of received signals from the base stations.

FIG. 1

FIG. 2

FIG. 3

FIG. 4